# EUROPEAN PATENT APPLICATION

(11) **EP 2 924 767 A2**
(43) Date of publication of application: **30.09.2015**
(21) Application number: 14199055.6
(22) Date of filing: 18.12.2014
(51) Int. Cl.: H01M 2/22, H01M 2/30

(54) **Rechargeable battery**

(30) Priority: 27.02.2014 KR 20140023696
(71) Applicant: Samsung SDI Co., Ltd., Yongin-si, Gyeonggi-do (KR)
(72) Inventor: KANG, Shingun, Yongin-si Gyeonggi-do (KR)
(74) Representative: Mounteney, Simon James

(57) **Abstract**

A rechargeable battery is disclosed. In one aspect, the rechargeable battery includes an electrode assembly including a first electrode plate, a second electrode plate and a separator. The rechargeable battery also includes a case accommodating the electrode assembly, wherein the case has an opening. The rechargeable battery further includes a cap assembly including a cap plate, an insulation plate, a terminal plate and an electrode terminal. The cap assembly substantially seals the opening of the case and the terminal plate has a terminal through hole defined to pass through the terminal plate. At least a portion of the electrode terminal is inserted into the terminal through hole and at least one step is formed in the terminal through hole between opposing surfaces of the terminal plate.

## Description

### BACKGROUND

### Field of the Invention

The invention generally relates to a rechargeable battery.

### Description of the Related Art

Recently, compact and lightweight electrical/electronic devices such as cellular phones, notebook computers, and camcorders have been developed and manufactured. These devices typically employ a battery pack so that they can operate anywhere without reliance on a separate power source. Such battery packs include at least one battery incorporated therein to output a voltage of a predetermined level to drive portable electric/electronic devices for a given period of time. Battery packs generally use rechargeable secondary batteries due to the low cost of manufacturing these batteries.

Rechargeable batteries often include an electrode assembly having a wound structure. The electrode assembly typically includes a positive electrode plate coated with a positive electrode active material, a negative electrode plate coated with a negative electrode active material and a separator interposed therebetween to prevent electric shorts. Rechargeable batteries also include a case accommodating the electrode assembly, an electrolytic solution injected into the case, and tend to have a cap assembly sealing the case. Such rechargeable batteries are manufactured by positioning the electrode assembly and the electrolytic solution into the case and sealing the case with the cap assembly.

The cap assembly of such a rechargeable battery usually includes a cap plate including a through hole. The cap assembly typically also includes a terminal plate positioned under the cap plate and an insulation plate interposed between the cap plate and the terminal plate and electrically insulating the cap plate and the terminal plate from each other. The terminal plate and insulation plate both include through holes. The cap assembly also includes an electrode terminal connected to the through holes of the cap plate, the insulation plate and the terminal plate and electrically connected to the terminal plate.

During manufacture, the electrode terminal is rotated and pressed by spinning equipment to be thermally deformed in the through holes of the cap plate, the insulation plate and the terminal plate to then be connected to the through holes. However, the electrode terminal may consequently have a tapered structure due to the rotation, resulting in an increase in contact resistance due to a reduced contact area between the electrode terminal and the terminal plate.

### SUMMARY OF CERTAIN INVENTIVE ASPECTS

The present invention sets out to overcome the above problems of the prior art.

One inventive aspect is a rechargeable battery, which includes at least one step in a terminal through hole in a terminal plate by forming a bottom portion of the terminal through hole to be larger than a top portion of the terminal through hole, thereby stabilizing contact resistance between the terminal plate and electrode terminal by increasing a contact area therebetween.

Another aspect is a rechargeable battery including rechargeable battery comprising an electrode assembly including a first electrode plate, a second electrode plate and a separator, a case in which the electrode assembly and an electrolytic solution are accommodated, and a cap assembly including a cap plate, an insulation plate, a terminal plate and an electrode terminal and coupled to a top opening of the case to seal the case, wherein the terminal plate includes a terminal through hole passing through between its top and surfaces to allow the electrode terminal to be inserted thereinto, and a cross-sectional area of the electrode terminal is larger than an inner diameter of the terminal through hole on the bottom surface of the terminal plate.

An inner diameter of the terminal through hole on the bottom surface of the terminal plate may be larger than that of the terminal through hole on the top surface of the terminal through hole.

The terminal through hole on the top surface of the terminal plate may have a different shape from that on the bottom surface of the terminal plate.

The terminal plate may further include a protrusion part horizontally protruding on the top surface of the terminal plate toward the central axis of the terminal through hole.

The terminal through hole may include a first terminal through hole formed to extend from the top surface to the bottom surface of the terminal plate and having a first inner diameter, and a second terminal through hole formed to extend from the bottom surface to the top surface of the terminal plate and having a second inner diameter larger than the first inner diameter of the first terminal through hole.

At least one step may be provided between the first terminal through hole and the second terminal through hole.

A central axis of the first terminal through hole and a central axis of the second terminal through hole may be positioned on the same line.

A height of the first terminal through hole may be greater than that of the second terminal through hole.

The terminal through hole may have a circular shape on the top surface of the terminal plate.

The terminal through hole may be shaped of one of a circle and a polygon on the bottom surface of the terminal plate.

The cap plate may include a terminal through hole passing through between its top and bottom surfaces to allow the electrode terminal to be inserted into the terminal through hole and may be electrically disconnected from the electrode terminal by a gasket surrounding an outer circumferential portion of the electrode terminal.

The insulation plate may include a terminal through hole passing through between its top and bottom surfaces to allow the electrode terminal to be inserted into the terminal through hole and may be interposed between the cap plate and the terminal plate.

Another aspect is a rechargeable battery including an electrode assembly including a first electrode plate, a second electrode plate and a separator, a case in which the electrode assembly and an electrolytic solution are accommodated, and a cap assembly including a cap plate, an insulation plate, a terminal plate and an electrode terminal and coupled to a top opening of the case to seal the case, wherein the terminal plate includes a terminal through hole passing through between its top and surfaces to allow the electrode terminal to be inserted thereinto, and the terminal plate includes at least one step provided in the terminal through hole between top and bottom surfaces of the terminal plate.

An inner diameter of the terminal through hole on the bottom surface of the terminal plate may be larger than that of the terminal through hole on the top surface of the terminal through hole.

Another aspect is a rechargeable battery comprising an electrode assembly including a first electrode plate, a second electrode plate and a separator; a case accommodating the electrode assembly, wherein the case has an opening; and a cap assembly including a cap plate, an insulation plate, a terminal plate and an electrode terminal, wherein the cap assembly substantially seals the opening of the case, wherein the terminal plate has a terminal through hole defined to pass through the terminal plate, wherein the terminal plate includes first and second surfaces opposing each other, wherein the first surface is closer to the electrode assembly than the second surface, wherein the electrode terminal includes first and second portions opposing each other, wherein the first portion is closer to the electrode assembly than the second portion, wherein at least the first portion of the electrode terminal is inserted into the terminal through hole, and wherein the diameter of the first portion of the electrode terminal is greater than a first diameter of the terminal through hole at the second surface of the terminal plate.

The terminal through hole can have a second diameter at the first surface of the terminal plate and the second diameter can be greater than the first diameter. The terminal through hole can have different shapes at the first and second opposing surfaces of the terminal plate. The terminal plate can further include a protrusion part protruding toward the central axis of the terminal through hole. A recess can be formed adjacent to the first portion of the electrode terminal and at least a portion of the protrusion part can be inserted into the recess. The terminal through hole can include a first terminal through hole having the first diameter and downwardly extending from the second surface of the terminal plate and a second terminal through hole having a second diameter greater than the first diameter and upwardly extending from the first surface of the terminal plate.

At least one axially aligned step can be formed between the first and second terminal through holes. The first and second terminal through holes can be concentric. The height of the first terminal through hole can be greater than that of the second terminal through hole. The terminal through hole can have a substantially circular shape on the second surface of the terminal plate. The terminal through hole can have a substantially circular or polygonal shape on the first surface of the terminal plate. The cap plate can have a cap through hole defined to pass through the cap plate, wherein at least the first portion of the electrode terminal is inserted into the cap through hole and wherein the rechargeable battery further comprises a gasket electrically insulating the cap plate from the electrode terminal. The insulation plate can have an insulation through hole defined to pass through the insulation plate, wherein at least the first portion of the electrode terminal is inserted into the insulation through hole and wherein the insulation plate is interposed between the cap plate and the terminal plate.

Another aspect is a rechargeable battery comprising an electrode assembly including a first electrode plate, a second electrode plate and a separator; a case accommodating the electrode assembly, wherein the case has an opening; and a cap assembly including a cap plate, an insulation plate, a terminal plate and an electrode terminal, wherein the cap assembly substantially seals the opening of the case, wherein the terminal plate has a terminal through hole defined to pass through the terminal plate, wherein at least a portion of the electrode terminal is inserted into the terminal through hole, and wherein at least one step is formed in the terminal through hole between opposing surfaces of the terminal plate.

The terminal plate can include first and second surfaces opposing each other, wherein the first surface is closer to the electrode assembly than the second surface, wherein the terminal through hole has a first diameter at the second surface of the terminal plate and a second diameter at the first surface of the terminal plate, and wherein the second diameter is greater than the first diameter.

Another aspect is a rechargeable battery comprising an electrode assembly; a case accommodating the electrode assembly; a cap assembly substantially sealing the case, wherein the cap assembly includes a terminal plate having top and bottom surfaces with a stepped terminal through hole extending from the top surface to the bottom surface; and an electrode terminal extending through the terminal through hole of the terminal plate, wherein the electrode terminal has a bottom portion that is larger than a minimum diameter of the terminal through hole.

The bottom surface of the terminal plate can include a recess that receives the bottom portion of the electrode terminal. The recess in the bottom portion of the electrode terminal can have a cross sectional area that is greater than the cross sectional area of the through hole at the top surface of the terminal plate. The shape of the terminal through hole at the top surface of the terminal plate can be different than the shape of the recess at the bottom surface of the terminal plate. The recess can form at least one step at the bottom surface of the terminal plate.

At least some of the above and other features of the invention are set out in the claims.

Additional aspects and/or advantages will be set forth in part in the description which follows and in part will be obvious from the description or may be learned by practice of the described technology.

### BRIEF DESCRIPTION OF THE DRAWINGS

FIG. 1 is an exploded perspective view illustrating a rechargeable battery according to an embodiment of the invention.
FIGS. 2A and 2B are a bottom view and a partially cross-sectional view of the cap assembly of the rechargeable battery shown in FIG. 1.
FIGS. 3A and 3B are a bottom perspective view and a cross-sectional view of the cap plate of the rechargeable battery shown in FIG. 1.
FIG. 4 is a bottom perspective view illustrating the cap plate of a rechargeable battery according to another embodiment of the invention.
FIGS. 5A and 5B are a bottom perspective view and a cross-sectional view of the cap plate of the rechargeable battery shown in FIG. 4.

### DETAILED DESCRIPTION

Hereinafter, examples of embodiments of the invention will be described in detail with reference to the accompanying drawings such that they can easily be made and used by those skilled in the art. Throughout the specification, like numerals refer to like elements.

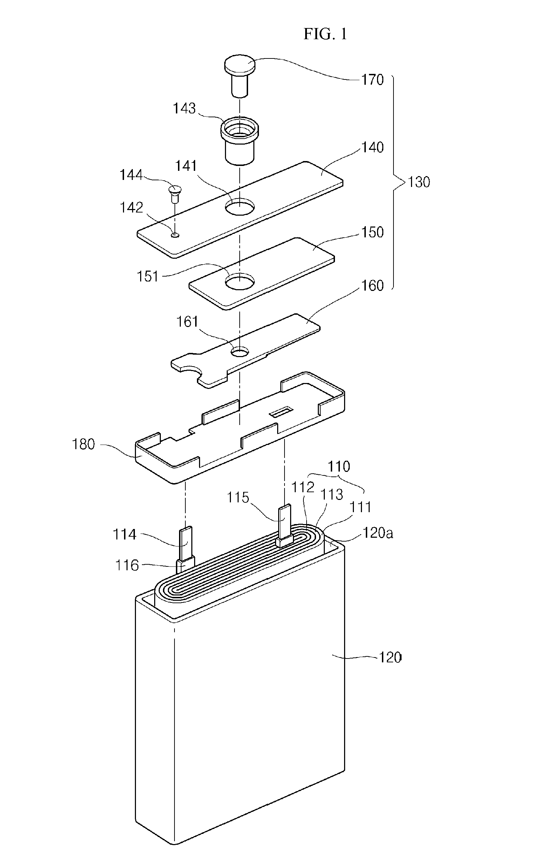

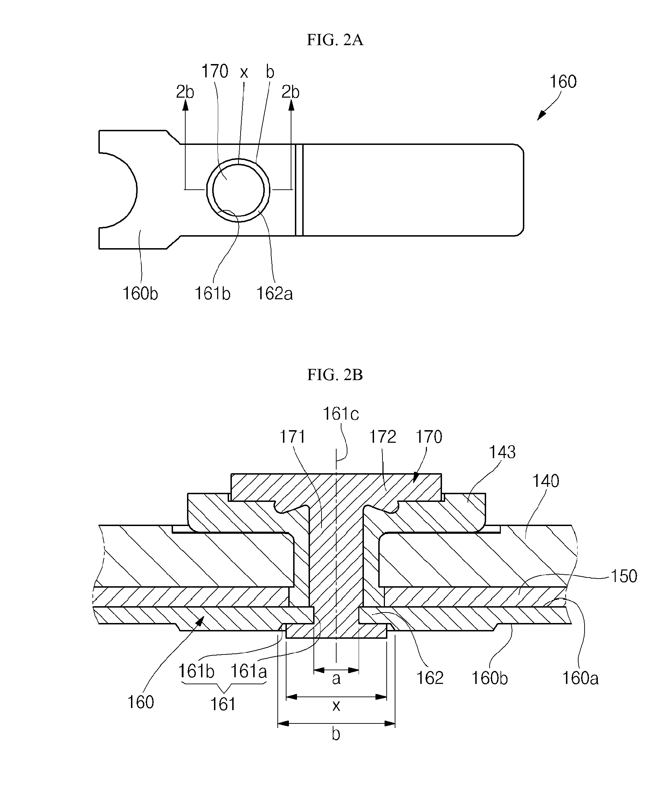

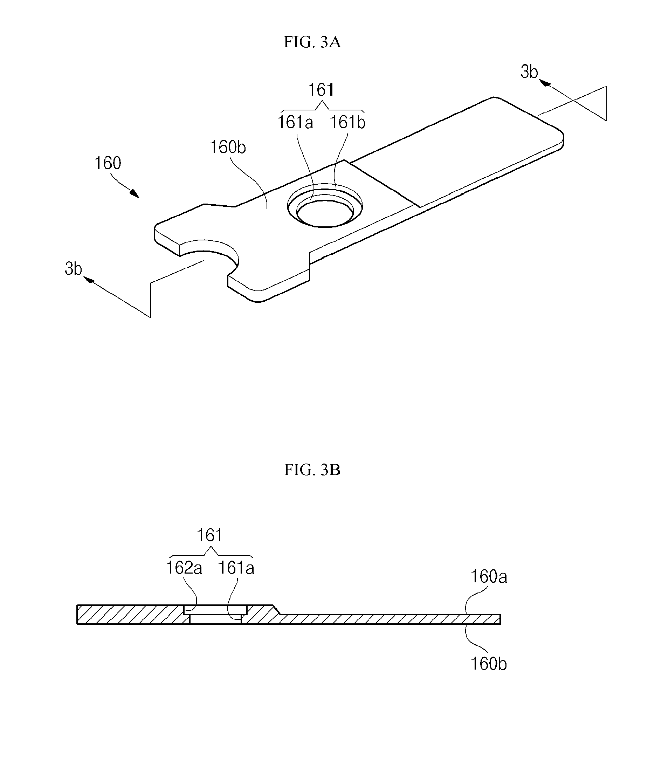

Hereinafter, a rechargeable battery according to an embodiment of the invention will be described with reference to FIGS. 1, 2A, 2B, 3A and 3B.

The rechargeable battery 100 includes an electrode assembly 110, a case 120 accommodating the electrode assembly 110, and a cap assembly 130 sealing a top opening 120a of the case 120.

In some embodiments, the electrode assembly 110 includes a first electrode plate 111, a second electrode plate 112 and a separator 113 that are wound roughly in a jelly roll configuration. The first electrode plate 111 and the second electrode plate 112 have different polarities. The first electrode plate 111 may be a positive electrode plate and the second electrode plate 112 may be a negative electrode plate, and vice versa.

The electrode assembly 110 further includes a first electrode tab 114 and a second electrode tab 115 respectively welded to the first electrode plate 111 and the second electrode plate 112. Thus, the first electrode tab 114 has the same polarity as the first electrode plate 111 of the electrode assembly 110 and the second electrode tab 115 has the same polarity as the second electrode plate 112 of the electrode assembly 110. The following description will describe an embodiment wherein the first electrode tab 114 is a positive electrode tab and the second electrode tab 115 is a negative electrode tab. The first and second electrode tabs 114 and 115 protrude from a top portion of the electrode assembly 110. In addition, the electrode assembly 110 may further include an insulation tape 116 provided at a boundary portion from which the first and second electrode tabs 114 and 115 protrude to prevent electrode plates having different polarities from being electrically shorted.

The case 120 may have a substantially hexahedral shape or another shape to accommodate the electrode assembly 110 in its internal space. In this embodiment, the case 120 has a substantially hexahedral shape. The case 120 has the top opening 120a and the electrode assembly 110 is placed in the internal space of the case 120 through the top opening 120a. The case 120 is formed of a metal and may serve as a terminal. The case 120 may be formed of lightweight aluminum or an aluminum alloy.

The cap assembly 130 includes a cap plate 140, an insulation plate 150, a terminal plate 160 and an electrode terminal 170. The cap assembly 130 is connected to a separate insulation case 180 that is connected to the top opening 120a of the case 120 to seal the case 120.

The cap plate 140 may be a metal plate having a size and shape corresponding to the top opening 120a of the case 120. The first electrode tab 114 of the electrode assembly 110 passing through the insulation case 180 is welded to a bottom surface of the cap plate 140. Thus, the cap plate 140 has the same polarity as the first electrode tab 114 of the electrode assembly 110.

A through hole or cap through hole 141 passing through between top and bottom surfaces of the cap plate 140 is formed in the center of the cap plate 140 and the electrode terminal 170 is inserted into the cap through hole 141. In order to insulate the electrode terminal 170 and the cap plate 140 from each other, a tubular gasket 143 is mounted on an inner surface of the cap through hole 141. The gasket 143 is in close contact with the cap through hole 141 and the electrode terminal 170 between the cap through hole 141 and the electrode terminal 170 and electrically insulates the electrode terminal 170 and the cap plate 140 from each other. Accordingly, the cap through hole 141 of the cap plate 140 has a size corresponding to an outer diameter of the gasket 143.

After the cap plate 140 is assembled with the top opening 120a of the case 120, an electrolytic solution is injected into the internal space of the case 120 via an electrolyte injection hole 142 further provided at one side of the case 120. In addition, after the electrolytic solution is injected into the case 120, the electrolyte injection hole 142 is sealed by a plug 144.

The insulation plate 150 is formed of an electrically insulating material and is arranged between the cap plate 140 and the terminal plate 160 to electrically insulate the cap plate 140 and the terminal plate 160 from each other. The insulation plate 150 includes a through hole or insulation through hole 151 located to correspond to the cap through hole 141 of the cap plate 140 to allow the electrode terminal 170 to be inserted into the through hole 151. The insulation plate 150 is connected to the electrode terminal 170 by inserting the electrode terminal 170 into the insulation through hole 151 of the insulation plate 150. The gasket 143 is further provided between the insulation through hole 151 of the insulation plate 150 and the electrode terminal 170. In addition, the insulation through hole 151 of the insulation plate 150 can have a size corresponding to the outer diameter of the gasket 143. Thus, the insulation through hole 151 of the insulation plate 150 can have a size corresponding to the cap through hole 141 of the cap plate 140.

The terminal plate 160 may be a metal plate having a top surface 160a making close contact with a bottom surface of the insulation plate 150. A bottom surface 160b of the terminal plate 160 faces a top surface of the insulation case 180. Accordingly, the terminal plate 160 is interposed between the insulation plate 150 and the insulation case 180. The top surface 160a of the terminal plate 160, for example, has a smaller size than the bottom surface of the insulation plate 150. The terminal plate 160 is electrically insulated from the cap plate 140 by the insulation plate 150. The bottom surface 160b of the terminal plate 160 may be welded to the second electrode tab 115 of the electrode assembly 110 passing through the insulation case 180.

The terminal plate 160 has a terminal through hole 161 passing through between the top surface 160a and the bottom surface 160b, and the electrode terminal 170 is inserted into the terminal through hole 161 to be electrically connected thereto. The terminal through hole 161 of the terminal plate 160 is located to correspond to the terminal through hole 141 of the cap plate 140.

A first inner diameter a of the terminal though hole 161 on the top surface 160a of the terminal plate 160 is less than a second inner diameter b of the bottom surface 160b of the terminal plate 160. The terminal through hole 161 on the top surface of the terminal plate 160 has a different shape and/or size from that on the bottom surface 160b of the terminal plate 160.

The terminal through hole 161 includes a first terminal through hole 161a formed to extend from the top surface 160a to the bottom surface 160b of the terminal plate 160 and a second terminal through hole 161b formed to extend from the bottom surface 160b towards the top surface 160a of the terminal plate 160. Here, central axes 161c of the first terminal through hole 161a and the second terminal through hole 161b are positioned on the same line, i.e. the first and second terminal through holes 161a and 161b are concentric. In addition, an inner diameter of the first terminal through hole 161a is substantially equal to the first inner diameter a on the top surface 160a of the terminal plate 160 and an inner diameter of the second terminal through hole 161b is substantially equal to the second inner diameter b on the bottom surface 160b of the terminal plate 160. Thus, the second inner diameter b of the second terminal through hole 161b is greater than the first inner diameter a of the first terminal through hole 161a. The terminal through hole 161 has at least one step formed due to the difference in the inner diameters between the first terminal through hole 161a and the second terminal through hole 161b.

The terminal plate 160 further includes a protrusion part 162 horizontally protruding on the top surface 160a thereof toward the central axis 161c of the terminal through hole 161. The first inner diameter a of the first terminal through hole 161a is smaller than the second inner diameter b of the second terminal through hole 161b due to the protrusion part 162. Here, the height of the first terminal through hole 161a may be greater than that of the second terminal through hole 161b. In addition, the terminal plate 160 may be configured such that the protrusion part 162 protrudes farther than an inner diameter of the gasket 143 toward the central axis 161c of the terminal through hole 161 to make the first inner diameter a of the first terminal through hole 161a less than the inner diameter of the gasket 143. However, the described technology is not limited thereto.

The terminal plate 160 contacts the electrode terminal 170 such that it is in close contact with the first inner diameter a of the first terminal through hole 161a and a bottom surface 162a of the protrusion part 162. The terminal plate 160 is electrically connected to the electrode terminal 170. Here, a region of the bottom surface 162a of the protrusion part 162, which is adjacent to the second inner diameter b of the terminal plate 160, may be exposed to a lower portion of the terminal plate 160. Accordingly, the second inner diameter b of the terminal plate 160 has a larger size than a cross-sectional area x of the bottom surface of the electrode terminal 170.

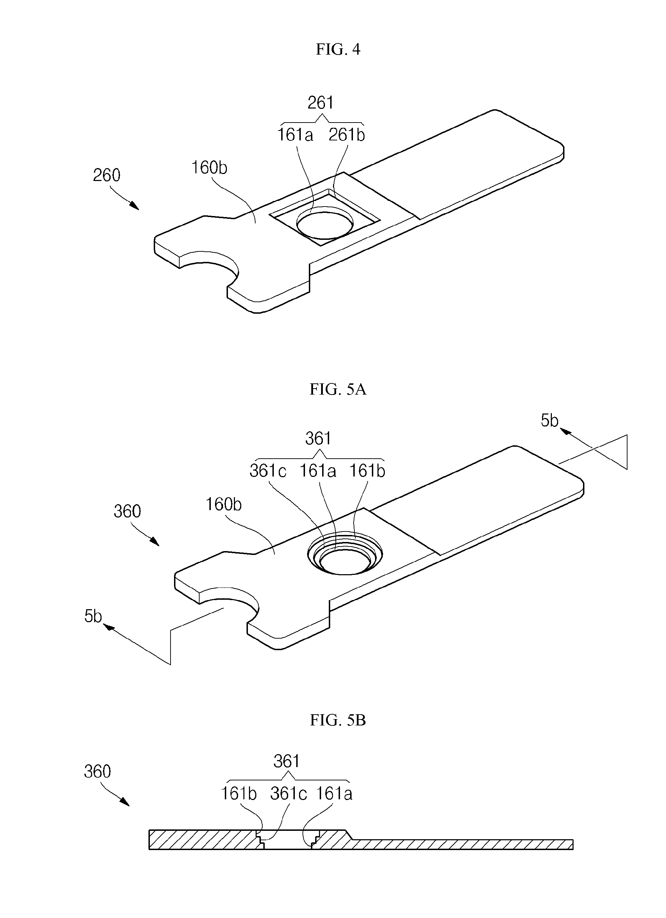

In order to make the first terminal through hole 161a contact an outer circumferential surface of the electrode terminal 170, the first terminal through hole 161a may have a substantially circular hole shape similar to the corresponding portion of the electrode terminal 170. The second terminal through hole 161b may have a substantially circular hole shape similar to the first terminal through hole 161a. However, as shown in FIG. 4, the second terminal through hole 261b may have a substantially rectangular shape. In FIG. 4, the second terminal through hole 261b of a terminal plate 260 is substantially rectangular, but the described technology is not limited thereto. The second terminal through hole 261b of the terminal plate 260 may also have a substantially polygonal shape.

In addition, as shown in FIGS. 5A and 5B, a terminal plate 360 may further include a third terminal through hole 361c provided between a first terminal through hole 161a and a second terminal through hole 161b. The inner diameter of the third terminal through hole 361c may be greater than the first inner diameter a of the first terminal through hole 161a and may be less than the second inner diameter b of the second terminal through hole 161b. Accordingly, at least two steps may be formed between the first terminal through hole 161a and the second terminal through hole 161b due to the change in the inner diameter of the terminal through hole 361. However, the described technology is not limited to the above described number of steps in the terminal through hole 361.

The electrode terminal 170 is inserted into the through holes 141,151 and 161 of the cap plate 140, the insulation plate 150 and the terminal plate 160. The electrode terminal 170 may be a metal pin having a substantially cylindrical shape. The electrode terminal 170 includes a body part 171 inserted in the through holes 141,151 and 161 and a head part 172 protruding a predetermined length to a top surface of the cap plate 140. The top surface of the cap plate 140 and the head part 172 of the electrode terminal 170 are electrically insulated from each other by the gasket 143.

In addition, the gasket 143 is interposed between the body part 171 of the electrode terminal 170 and the cap plate 140 and between the body part 171 of the electrode terminal 170 and the insulation plate 150. The electrode terminal 170 is inserted into the terminal through hole 161 of the terminal plate 160 to contact the terminal plate 160. The electrode terminal 170 may be a negative terminal electrically connected to the terminal plate 160.

The electrode terminal 170 is inserted into the through holes 141,151 and 161 of the cap plate 140, the insulation plate 150 and the terminal plate 160 while being rotated by spinning equipment. Here, the electrode terminal 170 may have a lower portion outwardly spread from a central axis 161c. The terminal through hole 161 of the terminal plate 160 is configured to be stepped such that its bottom portion is larger than its top portion, thereby increasing the contact area between the terminal plate 160 and the electrode terminal 170 and reducing the contact resistance therebetween. When the protrusion part 162 of the terminal plate 160 protrudes farther than an inner diameter of the gasket 143, the contact area between the terminal plate 160 and the electrode terminal 170 can be further increased.

The insulation case 180 is formed of an electrically insulating material and is interposed between the cap assembly 130 and the electrode assembly 110 to electrically insulate the cap assembly 130 and the electrode assembly 110 from each other. In addition, the insulation case 180 includes tab holes 181 and 182 to allow the first electrode tab 114 and the second electrode tab 115 of the cap assembly 130 to protrude upward. Thus, the insulation case 180 electrically insulates the cap assembly 130 from a top end of the electrode assembly 110 from which the first electrode tab 114 and the second electrode tab 115 of the electrode assembly 110 protrude.

Although the inventive technology has been described with reference to certain exemplary embodiments thereof, it will be understood by those skilled in the art that a variety of modifications and variations may be made to the present invention without departing from the spirit or scope of the present invention defined in the appended claims, and their equivalents.

## Claims

1. A rechargeable battery, comprising:
an electrode assembly including a first electrode plate, a second electrode plate and a separator;
a case accommodating the electrode assembly, wherein the case has an opening; and
a cap assembly including a cap plate, an insulation plate, a terminal plate and an electrode terminal, wherein the cap assembly substantially seals the opening of the case, wherein the terminal plate has a terminal through hole defined to pass through the terminal plate, wherein the terminal plate includes first and second surfaces opposing each other, wherein the first surface is closer to the electrode assembly than the second surface, wherein the electrode terminal includes first and second portions opposing each other, wherein the first portion is closer to the electrode assembly than the second portion, wherein at least the first portion of the electrode terminal is inserted into the terminal through hole, and wherein the diameter of the first portion of the electrode terminal is greater than a first diameter of the terminal through hole at the second surface of the terminal plate.

2. A rechargeable battery according to claim 1, wherein the terminal through hole has a second diameter at the first surface of the terminal plate and wherein the second diameter is greater than the first diameter.

3. A rechargeable battery according to claim 1 or 2, wherein the terminal through hole has different shapes at the first and second opposing surfaces of the terminal plate.

4. A rechargeable battery according to any preceding claim, wherein the terminal plate further includes a protrusion part protruding toward the central axis of the terminal through hole.

5. A rechargeable battery according to claim 4, wherein a recess is formed adjacent to the first portion of the electrode terminal and wherein at least a portion of the protrusion part is inserted into the recess.

6. A rechargeable battery according to claim 1, wherein the terminal through hole includes:
a first terminal through hole having the first diameter and downwardly extending from the second surface of the terminal plate; and
a second terminal through hole having a second diameter greater than the first diameter and upwardly extending from the first surface of the terminal plate.

7. A rechargeable battery according to claim 6, wherein at least one axially aligned step is formed between the first and second terminal through holes.

8. A rechargeable battery according to claim 6 or 7, wherein the first and second terminal through holes are concentric.

9. A rechargeable battery according to claim 6, 7 or 8, wherein the height of the first terminal through hole is greater than that of the second terminal through hole.

10. A rechargeable battery according to any preceding claim, wherein the terminal through hole has a substantially circular shape on the second surface of the terminal plate.

11. A rechargeable battery according to any preceding claim, wherein the terminal through hole has a substantially circular or polygonal shape on the first surface of the terminal plate.

12. A rechargeable battery comprising:
an electrode assembly including a first electrode plate, a second electrode plate and a separator;
a case accommodating the electrode assembly, wherein the case has an opening; and
a cap assembly including a cap plate, an insulation plate, a terminal plate and an electrode terminal, wherein the cap assembly substantially seals the opening of the case, wherein the terminal plate has a terminal through hole defined to pass through the terminal plate, wherein at least a portion of the electrode terminal is inserted into the terminal through hole, wherein at least one step is formed in the terminal through hole between opposing surfaces of the terminal plate, wherein the terminal plate includes first and second surfaces opposing each other, wherein the first surface is closer to the electrode assembly than the second surface, wherein the terminal through hole has a first diameter at the second surface of the terminal plate and a second diameter at the first surface of the terminal plate, and wherein the second diameter is greater than the first diameter.

13. A rechargeable battery comprising:
an electrode assembly;
a case accommodating the electrode assembly;
a cap assembly substantially sealing the case, wherein the cap assembly includes a terminal plate having top and bottom surfaces with a stepped terminal through hole extending from the top surface to the bottom surface; and
an electrode terminal extending through the terminal through hole of the terminal plate,
wherein the electrode terminal has a bottom portion that is larger than a minimum diameter of the terminal through hole.

14. A battery according to claim 13, wherein the bottom surface of the terminal plate includes a recess that receives the bottom portion of the electrode terminal.

15. A battery according to claim 14, wherein the recess forms at least one step at the bottom surface of the terminal plate.
